# EUROPÄISCHE PATENTSCHRIFT

(11) **EP 1 601 449 B1**
(45) Veröffentlichungstag und Bekanntmachung des Hinweises auf die Patenterteilung: **27.09.2006**
(21) Anmeldenummer: 03815820.0
(22) Anmeldetag: 19.11.2003
(51) Int. Cl.: B01D 71/02, B01D 63/08

(54) **ANORGANISCHE SCHICHTENSTAPEL UND VERFAHREN ZU SEINER HERSTELLUNG**
STACK OF INORGANIC LAYERS AND METHOD FOR PRODUCTION THEREOF
EMPILEMENT DE COUCHES INORGANIQUES ET PROCÉDÉ DE PRODUCTION CORRESPONDANT

(30) Priorität: 13.02.2003 DE 10305866
(43) Veröffentlichungstag der Anmeldung: 07.12.2005
(73) Patentinhaber: ITN NANOVATION GMBH, 66117 Saarbrücken (DE)
(72) Erfinder: BINKLE, Olaf, 66459 Kirkel (DE); NONNINGER, Ralph, 66129 Saarbrücken (DE)
(74) Vertreter: Kohler Schmid Möbus
(86) Internationale Anmeldenummer: PCT/DE2003/003832
(87) Internationale Veröffentlichungsnummer: WO 2004/071630

(56) Entgegenhaltungen:
- WO-A-00/35561
- WO-A-90/15661
- WO-A-03/035578
- DE-A- 19 938 674
- DE-C- 4 329 473
- DE-C- 10 039 272
- US-A- 5 306 646
- US-A- 5 730 869

## Beschreibung

Die Erfindung betrifft einen anorganischen Schichtenstapel gemäß Oberbegriff von Patentanspruch 6 und ein Verfahren zu dessen Herstellung gemäß Oberbegriff von Patentanspruch 1.

Ein derartiger Schichtenstapel und ein derartiges Verfahren zu seiner Herstellung sind beispielsweise durch die WO 00/35561 A bekannt geworden.

Aus der WO 00/35561 A sind eine Keramikschicht und ein Verfahren zu deren Herstellung bekannt, bei dem eine grüne Schicht durch Foliengießen hergestellt wird und in diese Schicht vor einer Sinterung eine Struktur eingeprägt wird. Die strukturierte Schicht wird weiter mit einer zweiten grünen Schicht vor dem Sintern verbunden, wodurch ein Multikanalflachmembranfilter entsteht. Die strukturierte Schicht weist eine nicht planare Struktur auf, die durch Prägen der Schicht mit zwei zueinander komplementären Prägestempeln erzeugt ist und dadurch beidseitig gewellt ist.

Weiter sind auch aus der US-A-5 730 869 eine Keramikschicht und ein Verfahren zu deren Herstellung bekannt, wobei hier eine Gussmasse in die Form einer ungesinterten Grünfolie überführt wird und an der durch Foliengießen hergestellten Schicht ("Spacer") eine rinnenartige Struktur durch mechanische Bearbeitung eingebracht wird. Durch Abdecken des mit einer Schicht verbundenen Spacers mit einer weiteren Schicht werden Kanäle gebildet, die somit durch einen Dreischichtaufbau ausgebildet sind.

Schließlich offenbart die DE 100 39 272 C ein Verfahren zur Herstellung eines keramischen Filterelements durch Schlickerguss von Stützkörpern aus keramischen Materialien. Dabei wird ein Zwischenkörper als Gießkern verwendet, der aus einem unter Wärmeeinfluss, also z.B. beim Sintern, flüchtigen Material besteht und eine kanalartige Struktur in den Stützkörpern abbildet.

Weiterhin ist aus der DE 43 29 473 C1 eine anorganische Schicht bekannt, die an ihrer einen Oberfläche im Querschnitt halbkreisförmige Rinnen aufweist. Die anorganische Schicht ist porös ausgebildet und kann als Filterschicht eingesetzt werden. Aufgrund der halbkreisförmigen Ausführung der Rinnen kann der Differenzdruck ohne Auftreten von Zugspannung in der Schicht aufgenommen werden. Insbesondere wenn zwei bekannte poröse strukturierte anorganische Schichten miteinander verbunden werden, werden Filtratsammelkanäle ausgebildet. Allerdings sind diese Kanäle an beiden Seiten offen. Um ein Filtermodul auszubilden, muss eine Seite verschlossen, insbesondere verödet werden. Ein Verfahren zur Herstellung der anorganischen Schicht ist in dieser Druckschrift nicht beschrieben.

### Aufgabe der Erfindung

Aufgabe der vorliegenden Erfindung ist es, bei einem Verfahren der eingangs genannten Art die Herstellung eines Schichtstapels zu vereinfachen und einen entsprechenden Schichtstapel vorzustellen.

### Gegenstand der Erfindung

Gelöst wird diese Aufgabe erfindungsgemäß durch ein Verfahren zur Herstellung eines Schichtenstapels mit den Merkmalen des Patentanspruchs 1. Eine grüne Schicht ist eine Schicht, die Partikel, insbesondere Keramikpartikel, enthält und die zu einer porösen oder dichten Schicht gesintert werden kann. Eine grüne Schicht ist relativ leicht mechanisch bearbeitbar, so dass nahezu beliebige Strukturen in die Oberfläche der Schicht eingebracht werden können. Durch den Sintervorgang werden diese eingebrachten Strukturen dann verfestigt.

Durch die eine oder mehreren rinnenartigen Strukturen können, insbesondere durch Verbindung mit anderen gleichartigen anorganischen Schichten, Kavitäten und Kanäle zum Abführen von Filtrat ausgebildet werden. Wenn eine derart strukturierte Oberfläche mit einer anderen Schicht abgedeckt wird, entstehen Kanäle, die an einem Ende verschlossen sind. Die rinnenartige Struktur ist so eingebracht, dass das andere Ende der rinnenartigen Struktur in eine andere rinnenartige Struktur mündet oder in einer Seite der grünen Schicht endet. Endet die rinnenartige Struktur dagegen in der Seite der Schicht, dann kann direkt an eine Rinne, bzw. wenn die Rinne durch Abdeckung mit einer anderen Schicht zu einem Kanal wird, an den Kanal ein Sammelkanal angeschlossen werden. Diese Ausführungsform ermöglicht eine einfache und sichere Abdichtung von dem aus der Schicht austretenden Kanal mit dem Sammelkanal.

Besonders bevorzugt ist es, wenn die Struktur durch Fräsen, Laserschneiden oder Prägen eingebracht wird. Insbesondere das Fräsen ist vorteilhaft, wenn die anorganische Schicht als Filterschicht eingesetzt werden soll. Im Gegensatz zum Prägen, wo Material verdrängt wird, wird beim Fräsen Material entfernt. Bereiche der grünen Schicht werden nicht schon vor dem Sintern verdichtet, so dass eine homogene grüne Schicht erhalten bleibt, die sich beim Sintern gleichmäßig verdichten kann. Dadurch können Inhomogenitäten, die beim Filtern stören, vermieden werden. Wird die mechanische Bearbeitung mittels Fräsen durchgeführt, können sehr kleine Strukturen bzw. Rinnen, insbesondere mit freien Querschnitten < 0,4 mm, erzeugt werden. Derartig hergestellte Schichten lassen sich besonders leicht und klein ausbilden. Über den Bearbeitungsschritt Fräsen lassen sich Rinnen in einem beliebigen Querschnitt ausbilden und die Anordnung der Rinne in der Oberfläche der anorganischen Schicht ist beliebig.

Besonders vorteilhaft ist es, wenn eine fächerartige Struktur eingebracht wird. Dadurch können die Rinnen auf einen Sammelkanal ausgerichtet werden und kann die Filtratabführung beschleunigt werden.

Insbesondere, wenn die grüne Schicht durch Foliengießen hergestellt wird, lassen sich nahezu beliebige Geometrien einer anorganischen Schicht herstellen. Wenn vor dem Einbringen der rinnenartigen Struktur eine erste und zweite grüne Schicht verbunden werden, wobei mindestens eine der Schichten strukturiert wird, können die Eigenschaften der Schicht, insbesondere deren Filtereigenschaften, durch die Wahl unterschiedlicher Materialien in den Schichten oder unterschiedlicher Teilchengrößen in den Schichten beeinflusst werden. Die Teilchen können dabei verschiedene Gestalten aufweisen, zum Beispiel können sie sphärisch, plättchenförmig oder faserförmig ausgebildet sein. Durch die Wahl der Teilchengröße kann die Porosität der anorganischen Schicht beeinflusst werden. Wird die grüne Schicht durch Extrusion hergestellt, so ist es beim Extrusionsvorgang gleichzeitig möglich, die Struktur in die Oberfläche der Schicht einzubringen.

Die in den grünen Schichten eingesetzten keramischen Werkstoffe sind vorzugsweise von Metall(misch)oxiden und Carbiden, Nitriden, Boriden, Siliciden und Carbonitriden von Metallen und Nichtmetallen abgeleitet. Beispiele hierfür sind Al₂O₃, teil- und vollstabilisiertes ZrO₂, Mullit, Cordierit, Perowskite, Spinelle, zum Beispiel BaTiO₃, PZT, PLZT, sowie SiC, Si₃N₄, B₄C, BN, MOSi₂, TiB₂, TiN, TiC und Ti(C,N). Es versteht sich, dass diese Aufzählung nicht vollständig ist. Selbstverständlich können auch Mischungen von Oxiden bzw. Nichtoxiden und Mischungen aus Oxiden und Nichtoxiden eingesetzt werden.

Bei einer bevorzugten weiteren Ausgestaltung des Verfahrens wird die erste Schicht zu einer grobporigen Trägerschicht und die zweite Schicht zu einer feinporigeren Funktionsschicht gesintert. Dabei stellt die feinporigere Funktionsschicht die filternde Schicht dar. Die grobporigere Trägerschicht stützt die feinporigere Funktionsschicht. In der Trägerschicht werden die rinnenartigen Strukturen ausgebildet. Nach dem Sintern erhält man einen Schichtstapel bzw. Keramikverbund.

Wenn zwei grüne Schichten oder Schichtstapel an ihren strukturierten Oberflächen miteinander laminiert werden, können Filtratabführkanäle besonders einfach realisiert werden. Dabei können die rinnenartigen Strukturen nur an der Oberfläche einer Schicht oder an den Oberflächen beider Schichten ausgebildet sein. Wenn die Schichten miteinander verbunden sind, können die rinnenartigen Strukturen versetzt angeordnet sein oder sich gegenüberliegen. Liegen sie sich gegenüber, werden im erhaltenen Schichtenstapel Kanäle mit großem Querschnitt ausgebildet.

In den Rahmen der Erfindung fällt auch ein anorganischer Schichtenstapel mit den Merkmalen des Patentanspruchs 6. Die poröse Schicht kann als Filterelement verwendet werden und die rinnenartigen Strukturen können als Filtratsammelstrukturen verwendet werden. Das Ende, das an der Seite der Schicht endet, stellt eine Austrittsöffnung dar, die beispielsweise mit einem Filtratsammelkanal verbunden werden kann.

Bei einer alternativen Ausführungsform mündet das andere Ende der rinnenartigen Struktur in eine Vertiefung, insbesondere eine andere rinnenartige Struktur. Dadurch können mehrere rinnenartige Strukturen in einer gemeinsamen Rinne zusammengeführt werden.

Bei einer Ausgestaltung der Erfindung ist vorgesehen, dass die mindestens eine rinnenartige Struktur im Querschnitt U-förmig oder rechteckig oder vieleckig ausgebildet ist.

Bei einer vorteilhaften Ausgestaltung ist mindestens eine feinporigere und eine grobporigere Schicht vorgesehen, wobei die grobporigere Schicht die rinnenartige Struktur aufweist. Dabei kann die grobporigere Schicht als Trägerschicht für die feinporigere Funktionsschicht, die die eigentliche filternde Schicht ist, verwendet werden. Die Trägerschicht verleiht dem gesamten Schichtenstapel eine höhere Stabilität. Bei einer bevorzugten Ausführungsform ist die Schicht mit ihrer strukturierten Oberfläche an einer anderen Schicht fixiert. Zwischen der strukturierten Oberfläche und der anderen Schicht bilden sich aufgrund der rinnenartigen Strukturen Kanäle aus. Diese Kanäle können als Filtratabführkanäle verwendet werden, insbesondere wenn die Schichten poröse Schichten sind. Die miteinander verbundenen Schichten können dieselbe oder eine unterschiedliche Porosität und dieselbe oder unterschiedliche Dicken aufweisen.

Bei einer bevorzugten Weiterbildung ist auch die andere Schicht an einer Oberfläche strukturiert und sind die beiden strukturierten Oberflächen aneinander fixiert. Durch diese Maßnahme können Filtratabführkanäle mit großem Querschnitt erzeugt werden. Die so beschaffenen Filtratabführkanäle sind an einem Ende verschlossen, wenn in den strukturierten Oberflächen rinnenartige Strukturen eingebracht sind, die mit einem Ende in der Schicht enden. Die durch eine Strukturierung erreichten Ausnehmungsformen können beim Zusammenfügen von zwei Schichten aufeinander deckungsgleich oder versetzt zueinander angeordnet sein.

Die zwischen den Schichten ausgebildeten Kanäle können grundsätzlich beliebige Querschnitte aufweisen. Besonders bevorzugt sind jedoch Kanäle mit quadratischem, viereckigem oder vieleckigem Querschnitt.

Besonders bevorzugt ist es, wenn die Kanäle in der Schicht bzw. dem Schichtenstapel zusammengeführt sind und eine gemeinsame Austrittsöffnung aufweisen. Insbesondere, wenn aus den Schichten Filterelemente hergestellt werden, kann das in den Filtratabführkanälen abgeführte Filtrat durch eine gemeinsame Austrittsöffnung aus dem Filterelement entnommen werden. Dadurch wird eine einfache Anbindung an einen Filtratsammelkanal ermöglicht.

Für die Schicht sind nahezu beliebige geometrische Gestalten denkbar. Besonders bevorzugt ist es jedoch, wenn die Schicht bzw. der Schichtenstapel quaderförmig oder zylindrisch ausgebildet ist.

Wenn in den aus den Schichten gebildeten Filterelementen sehr feine Strukturen ausgebildet sind, die insbesondere durch Fräsen der Schichten einfach erzeugt werden können, können sehr kleine und leichte Filterelemente Material sparend realisiert werden.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ausführungsbeispiele der erfindungsgemäßen anorganischen Schicht sind in der schematischen Zeichnung dargestellt und werden in der nachfolgenden Beschreibung erläutert. Es zeigt:
- **Fig. 1**: eine Draufsicht auf eine anorganische Schicht mit rinnenartigen Strukturen;
- **Fig. 2**: einen Querschnitt durch eine anorganische Schicht mit rinnenartigen Strukturen;
- **Fig. 3**: einen Querschnitt durch eine anorganische Schicht mit rinnenartigen Strukturen eines anderen Querschnitts;
- **Fig. 4**: Zwei Schichten gemäß der Fig. 3 in zusammengefügtem Zustand;
- **Fig. 5**: eine perspektivische Ansicht eines Schichtenstapels, in dessen Innerem Kanäle ausgebildet sind.

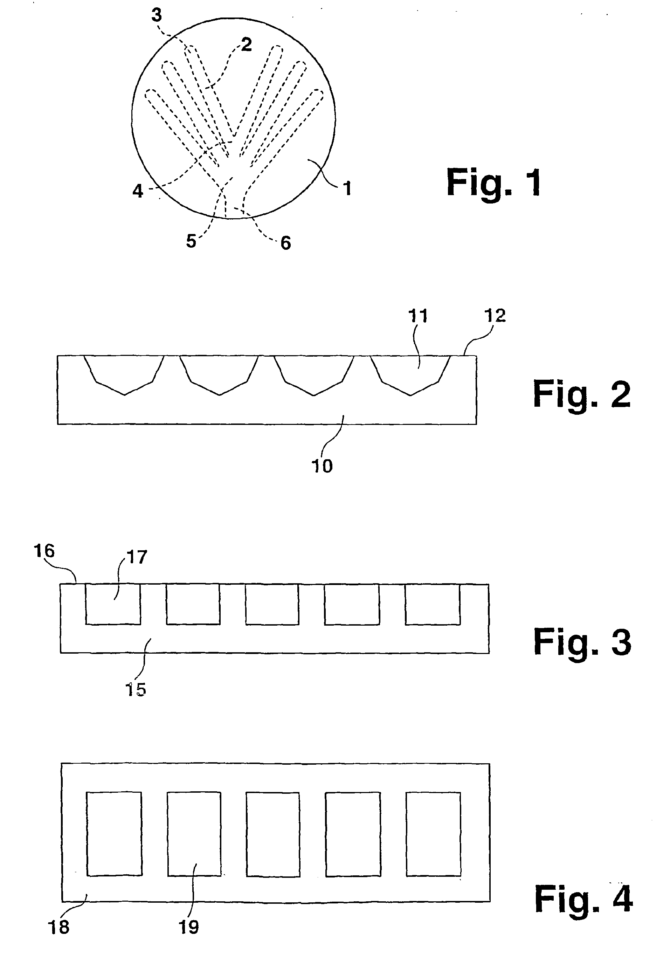

**Fig. 1** zeigt eine Draufsicht auf eine anorganische Schicht **1**, in deren Oberfläche rinnenartige Strukturen **2** in Fächerform ausgebildet sind. Die rinnenartigen Strukturen 2 enden mit ihrem einen Ende **3** in der anorganischen Schicht 1. Mit ihrem anderen Ende **4** münden die rinnenartigen Strukturen 2 in einer Vertiefung **5**, wobei die Vertiefung 5 tiefer als die rinnenartigen Strukturen 2 sein kann. Der Rinnengrund der rinnenartigen Strukturen 2 kann jedoch auch mit dem Grund der Vertiefung 5 fluchten. Die Vertiefung 5 mündet in einer Seite **6** der anorganischen Schicht 1.

**Fig. 2** zeigt einen Querschnitt durch eine anorganische Schicht **10**, in die parallel zueinander verlaufende rinnenartige Strukturen **11** durch Fräsen eingebracht wurden, wobei die rinnenartigen Strukturen 11 einen fünfeckigen Querschnitt aufweisen. Werden zwei solcher anorganischen Schichten 10 mit ihren strukturierten Oberflächen 12 miteinander verbunden, so entstehen im Querschnitt achteckige Kanäle.

In der **Fig. 3** ist ein Schnitt durch eine anorganische Schicht 15 gezeigt, wobei an der Oberfläche **16** rinnenartige Strukturen **17** ausgebildet sind, die einen rechteckigen Querschnitt aufweisen.

In der **Fig. 4** ist ein Querschnitt durch einen Schichtenstapel **18** gezeigt, der aus zwei Schichten 15 gemäß der **Fig. 3** hergestellt wurde. Dabei wurden zwei anorganische Schichten an ihren strukturierten Oberflächen miteinander verbunden. Dadurch wurden im Querschnitt rechteckige Kanäle **19** ausgebildet. Nach dem Sintern stellt der Schichtenstapel 18 eine Schicht mit innenliegenden Kanälen dar.

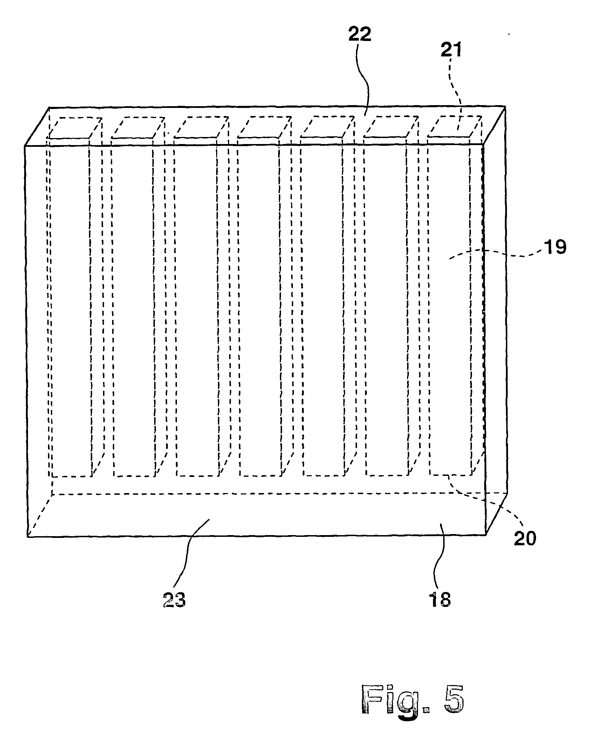

In der **Fig. 5** ist eine perspektivische Ansicht des Schichtenstapels 18 der Fig. 4 gezeigt. Der Schichtenstapel 18 hat eine Quaderform und weist im Ausführungsbeispiel als Filtratabführkanäle ausgebildete Kanäle 19 auf. Das eine Ende **20** der Kanäle 19 endet jeweils im Schichtenstapel 18. Das gegenüberliegende Ende **21** endet in einer Seite **22** des Schichtenstapels 18. Diese Enden 21 können mit einem nicht dargestellten Sammelkanal verbunden werden. Da die Enden 20 im Schichtenstapel 18 enden und von der der Seite 22 gegenüberliegenden Seite **23** beabstandet sind, mussten die Kanäle 19 nicht extra an einem Ende verschlossen werden. Der Schichtenstapel 18 eignet sich, da die anorganischen Schichten 15 (Fig. 3) porös ausgebildet sind, zum Einsatz als Filterelement. Zu filternde Flüssigkeit steht außen am Schichtenstapel 18 an und fließt aufgrund einer Druckdifferenz in die Kanäle 19, von wo aus das Filtrat über die Enden 21 der Kanäle 19 abgeführt wird.

Bei einem Verfahren zur Herstellung einer strukturierten anorganischen Schicht 1, insbesondere einer Keramikschicht, wird an der Oberfläche einer grünen Schicht eine Struktur durch mechanische Bearbeitung eingebracht, und die grüne Schicht wird anschließend gesintert. Vor einem Sinterungsprozess können zwei oder mehr Schichten laminiert und gemeinsam gesintert werden. Diese Vorgehensweise erlaubt eine genaue Kontrolle über die Lage und Abmessungen der Strukturen.

## Patentansprüche

1. Verfahren zur Herstellung eines Schichtenstapels (18), der strukturierte anorganische poröse Schichten (1, 10, 15), insbesondere Keramikschichten, aufweist, wobei an einer der Oberflächen (12, 16) einer grünen Schicht mindestens eine rinnenartige Struktur (2, 11, 17) durch mechanische Bearbeitung eingebracht wird und die grüne Schicht anschließend gesintert wird, wobei die rinnenartige Struktur (2, 11, 17) so eingebracht wird, dass sie zumindest einenends in der grünen Schicht endet, und wobei die grüne Schicht durch Foliengießen oder Extrudieren hergestellt wird,
**dadurch gekennzeichnet,**
**dass** zwei grüne Schichten an der strukturierten Oberfläche (12, 16) unter Bildung von Kanälen (19), die an einem Ende (20) verschlossen sind, miteinander laminiert werden und die rinnenartige Struktur (2, 11, 17) so eingebracht wird, dass das andere Ende (4) der rinnenartigen Struktur in einer Seite der grünen Schicht mündet.

2. Verfahren nach Anspruch 1, **dadurch gekennzeichnet, dass** die rinnenartige Struktur (2, 11, 17) durch Fräsen oder Laserschneiden oder Prägen eingebracht wird.

3. Verfahren nach einem der vorhergehenden Ansprüche, **dadurch gekennzeichnet, dass** eine fächerartige Struktur (2) eingebracht wird.

4. Verfahren nach einem der vorhergehenden Ansprüche, **dadurch gekennzeichnet, dass** vor dem Einbringen der rinnenartigen Struktur (2, 11, 17) eine erste und zweite grüne Schicht verbunden werden, wobei mindestens eine der Schichten strukturiert wird.

5. Verfahren nach Anspruch 4, **dadurch gekennzeichnet, dass** die erste Schicht zu einer grobporigen Trägerschicht und die zweite Schicht zu einer feinporigeren Funktionsschicht gesintert wird.

6. Anorganischer Schichtenstapel (18) umfassend eine durch Foliengießen oder Extrudieren einer grünen Schicht hergestellte anorganische poröse Schicht (1, 10, 15), insbesondere Keramikschicht, mit mindestens einer an ihrer Oberfläche (12, 16) ausgebildeten rinnenartigen Struktur (2, 11, 17), die einenends in der Schicht (1, 10, 15) endet, sowie eine andere anorganische Schicht, insbesondere Keramikschicht,
**dadurch gekennzeichnet,**
**dass** die Schicht (1, 10, 15) mit ihrer strukturierten Oberfläche (12, 16) unter Bildung von Kanälen (19), die an einem Ende (20) verschlossen sind, an der anderen Schicht fixiert ist und das andere Ende (4) der rinnenartigen Struktur (2, 11, 17) an einer Seite (22) der Schicht (1, 10, 16) endet.

7. Schichtenstapel nach Anspruch 6, **dadurch gekennzeichnet, dass** die mindestens eine rinnenartige Struktur (2, 11, 17) im Querschnitt u-förmig oder rechteckig oder vieleckig ausgebildet ist.

8. Schichtenstapel nach Anspruch 6 oder 7, **dadurch gekennzeichnet, dass** eine feinporige und eine grobporigere Schicht vorgesehen sind, wobei die grobporigere Schicht die rinnenartige Struktur (2, 11, 17) aufweist.

9. Schichtenstapel nach einem der Ansprüche 6 bis 8, **dadurch gekennzeichnet, dass** die andere Schicht an einer Oberfläche (12, 16) strukturiert ist und die beiden strukturierten Oberflächen aneinander fixiert sind.

10. Schichtenstapel nach einem der Ansprüche 6 bis 9, **dadurch gekennzeichnet, dass** die Kanäle (19) in der Schicht zusammengeführt sind und eine gemeinsame Austrittsöffnung aufweisen.

11. Schichtenstapel nach einem der Ansprüche 6 bis 10, **dadurch gekennzeichnet, dass** die Schicht quaderförmig oder zylindrisch, insbesondere scheibenförmig, ausgebildet ist.

## Claims

1. Method for producing a stack of layers (18) comprising structured, inorganic, porous layers (1, 10, 15), in particular ceramic layers, wherein at least one groove-like structure is introduced on one of the surfaces (12, 16) of a green layer through mechanical processing, and the green layer is subsequently sintered, wherein the groove-like structure (2, 11, 17) is introduced in such a manner that at least one end thereof terminates in the green layer, and wherein the green layer is produced through foil casting or extrusion, **characterized in that** two green layers are laminated to each other on the structured surface (12, 16), thereby forming channels (19) which are closed at one end (20), and the groove-like structure (2, 11, 17) is introduced in such a manner that the other end (4) of the groove-like structure terminates in one side of the green layer.

2. Method according to claim 1, **characterized in that** the groove-like structure (2, 11, 17) is introduced through milling or laser cutting or embossing.

3. Method according to any one of the preceding claims, **characterized in that** a fan-like structure (2) is introduced.

4. Method according to any one of the preceding claims, **characterized in that** a first and a second green layer are connected before introducing the groove-like structure (2, 11, 17), wherein at least one of the layers is structured.

5. Method according to claim 4, **characterized in that** the first layer is sintered into a coarse-pored carrier layer and the second layer is sintered into a fine-pored functional layer.

6. Inorganic stack of layers (18) comprising an inorganic, porous layer (1, 10, 15) produced through foil casting or extrusion of a green layer, in particular a ceramic layer, comprising at least one groove-like structure (2, 11, 17) formed on the surface (12, 16) thereof, one end of which terminates in the layer (1, 10, 15), and comprising another inorganic layer, in particular, a ceramic layer, **characterized in that** the layer (1, 10, 15) is fixed with its structured surface (12, 16) to the other layer, thereby forming channels (19) being closed at one end (20), and the other end (4) of the groove-like structure (2, 11, 17) terminates on one side (22) of the layer (1, 10, 16).

7. Stack of layers according to claim 6, **characterized in that** the at least one groove-like structure (2, 11, 17) has a U-shaped or rectangular or polygonal cross-section.

8. Stack of layers according to claim 6 or 7, **characterized in that** a fine-pored layer and a coarse-pored layer are provided, wherein the coarse-pored layer has the groove-like structure (2, 11, 17).

9. Stack of layers according to one of the claims 6 through 8, **characterized in that** one surface (12, 16) of the other layer is structured, and the two structured surfaces are fixed to each other.

10. Stack of layers according to any one of the claims 6 through 9, **characterized in that** the channels (19) are joined in the layer and have a common outlet opening.

11. Stack of layers according to any one of the claims 6 through 10, **characterized in that** the layer is cuboid or cylindrical, in particular disc-shaped.

## Revendications

1. Procédé de fabrication d'un empilement de couches (18), qui présente des couches poreuses inorganiques structurées (1, 10, 15), en particulier des couches céramiques, où, sur une des surfaces (12, 16) d'une couche brute, au moins une structure de type sillons (2, 11, 17) est réalisée par usinage mécanique et la couche brute est ensuite frittée, où la structure de type sillons (2, 11, 17) est ainsi réalisée qu'elle se finit au moins à une extrémité dans la couche brute et où la couche brute est fabriquée par coulée de feuilles ou par extrusion, **caractérisé en ce que** les deux couches brutes sont stratifiées conjointement sur la surface structurée (12, 16) en formant des canaux (19) qui sont fermés à une extrémité (20) et **en ce que** la structure de type sillons (2, 11, 17) est ainsi réalisée que l'autre extrémité (4) de la structure de type sillons débouche dans une face de la couche brute.

2. Procédé selon la revendication 1, **caractérisé en ce que** la structure de type sillons (2, 11, 17) est réalisée par fraisage ou par découpe au laser ou par emboutissage.

3. rocédé selon l'une des revendications précédentes, **caractérisé en ce qu'**une structure de type éventail (2) est réalisée.

4. Procédé selon l'une quelconque des revendications précédentes, **caractérisé en ce que**, avant la réalisation de la structure de type sillons (2, 11, 17), une première et une deuxième couche brute sont reliées, où au moins une des couches est structurée.

5. Procédé selon la revendication 4, **caractérisé en ce que** la première couche est frittée en une couche support à pores grossiers et la deuxième couche est frittée en une couche fonctionnelle à pores plus fins.

6. Empilement de couches inorganiques (18) comprenant une couche poreuse inorganique (1, 10, 15) fabriquée par coulée de feuilles ou extrusion d'une couche brute, en particulier une couche céramique, ayant au moins une structure de type sillons (2, 11, 17) formée sur sa surface (12, 16), qui se termine à une extrémité dans la couche (1, 10, 15), ainsi qu'une autre couche inorganique, en particulier une couche céramique, **caractérisée en ce que** la couche (1, 10, 15) est fixée à l'autre couche avec sa surface structurée (12, 16) en formant des canaux (19), qui sont fermés à une extrémité (20), et l'autre extrémité (4) de la structure de type sillons (2, 11, 17) se termine sur une face (22) de la couche (1, 10, 16).

7. Empilement de couches selon la revendication 6, **caractérisée en ce que** la moins une structure de type sillons (2, 11, 17) prend la forme d'un U ou une forme rectangulaire ou carrée en section transversale.

8. Empilement de couches selon la revendication 6 ou 7, **caractérisé en ce que** l'on prévoie une couche à pores fins et une couche à pores plus grossiers, où la couche à pores plus grossiers présente une structure de type sillons (2, 11, 17).

9. Empilement de couches selon l'une des revendications 6 à 8, **caractérisé en ce que** l'autre couche est structurée sur une surface (12, 16) et les deux surfaces structurées sont fixées l'une à l'autre.

10. Empilement de couches selon l'une des revendications 6 à 9, **caractérisé en ce que** les canaux (19) sont réunis dans la couche et présentent une ouverture de sortie commune.

11. Empilement de couches selon l'une des revendications 6 à 10, **caractérisé en ce que** la couche prend la forme d'un quadrilatère ou d'un cylindre, en particulier d'un disque.
